# EUROPÄISCHE PATENTSCHRIFT

(11) **EP 1 169 763 B1**
(45) Veröffentlichungstag und Bekanntmachung des Hinweises auf die Patenterteilung: **31.07.2002**
(21) Anmeldenummer: 00907333.9
(22) Anmeldetag: 22.02.2000
(51) Int. Cl.: H02H 9/00

(54) **SCHUTZSCHALTUNG FÜR EIN ELEKTRONISCHES GERÄT**
PROTECTIVE CIRCUIT FOR AN ELECTRONIC DEVICE
CIRCUIT DE PROTECTION POUR APPAREIL ELECTRONIQUE

(30) Priorität: 14.04.1999 AT 66699
(43) Veröffentlichungstag der Anmeldung: 09.01.2002
(73) Patentinhaber: Siemens AG Österreich, 1210 Wien (AT)
(72) Erfinder: MÜLLNER, Thomas, A-3424 Wolfpassing (AT)
(74) Vertreter: Matschnig, Franz, Dipl.-Ing.
(86) Internationale Anmeldenummer: AT0000046
(87) Internationale Veröffentlichungsnummer: WO0062393

(56) Entgegenhaltungen:
- EP-A- 0 617 499
- DE-A- 3 308 320

## Beschreibung

Die Erfindung bezieht sich auf eine Schutzschaltung für ein Netzgerät, welche zwischen einer Gleichspannungsquelle und dem Betriebsspannungseingang des Gerätes gelegen ist, und aus der Serienschaltung einer Diode und eines Begrenzungswiderstandes besteht, wobei die Diode und der Begrenzungswiderstand durch einen Relais-Arbeitskontakt überbrückt sind, welcher bei Erreichen eines vorgebbaren Mindestwertes einer Spannung des Netzgerätes, an welche eine Erregerwicklung des Relais angeschlossen ist, schließbar ist.

Eine Vielzahl von elektronischen Geräten, beispielsweise auch Schaltnetzteile, werden von einer Gleichspannungsquelle, z. B, einer Batterie, oder von einem lokalen Gleichspannungsnetz gespeist. Bei dem Anschließen des Gerätes an die Gleichspannungsquelle kann eine falsche Polung zur Zerstörung teurer Bauteile des Gerätes führen, sodass man einen Verpolschutz, z. B. in Form einer Diode oder einer Diodenbrücke vorsieht. Weiters kann das Anschließen des Gerätes an die Gleichspannungsquelle - bedingt durch induktive und/oder kapazitive Bauteile - zu sehr hohen Einschaltstromstößen führen, welche gleichfalls Zerstörungen von Bauelementen nach sich ziehen können. Dies kann zwar durch flinke Sicherungen, z. B. Schmelzsicherungen in vielen Fällen verhindert werden, doch ist ein oftmaliges Auswechseln der Sicherungen arbeitsintensiv, sodass man zur Einschaltstrombegrenzung einen Begrenzungswiderstand, insbesondere einen Heißleiter verwendet.

Schutzschaltungen dieser Art, bestehend, z. B. aus einer Diode und einem Heißleiter, erzeugen im Betrieb Dauerverluste, welche den Gesamtwirkungsgrad des Gerätes verringern. Bei einem Eängangsstrom des Gerätes von 2A und bei Verwendung einer Diode und eines 1 Ohm-Begrenzungswiderstandes liegen die zusätzlichen Dauerverluste bei ca. 5 Watt.

Eine Schutzschaltung, welche im wesentlichen der eingangs angegebenen Art entspricht, ist beispielsweise aus der DE 33 08 320 A1 bekannt geworden. Dabei wird mit Hilfe einer Steuerschaltung, welche die Spannungsdifferenz zwischen einer Versorgungsspannung und einem Verbraucher detektiert, ein gesteuerter Schalter, z. B. ein Relais oder einen HalbleiterSchalter so angesteuert, dass der Schalter erst schließt und damit den Begrenzungswiderstand überbrückt, wenn die Spannungsdifferenz zwischen Versorgungsspannung und Verbraucher unter ein gewisses Maß abgesunken ist. Da die gesamte Auswertung der Spannungsdifferenz sowie die Ansteuerung des Schalters elektronisch erfolgt, ist einerseits der Aufwand relativ hoch und andererseits eine gewisse Störanfälligkeit gegeben.

Eine Aufgabe der Erfindung liegt in der Schaffung einer Schutzschaltung, welche nicht nur deutlich geringere Dauerverluste nach sich zieht, sondern welche auch einfach und billig aufgebaut und besonders verlässlich ist

Diese Aufgabe wird mit einer Schutzschaltung der eingangs genannten Art gelöst, bei welcher erfindungsgemäß die Erregerwicklung des Relais an die Ausgangsspannung des Netzgerätes angeschlossen ist.

Die Erfindung bietet den angestrebten Schutz mit einem minimalen Aufwand und spricht auch an, wenn ein Fehler am potenzial betrennten Ausgang auftritt.

Falls in Serie mit dem gesteuerten Schalter ein niedrigohmiger Dämpfungswiderstand liegt, so nimmt man zwar geringfügig höhere Verluste in Kauf, doch werden Störungen beim Schaltvorgang besonders gering gehalten.

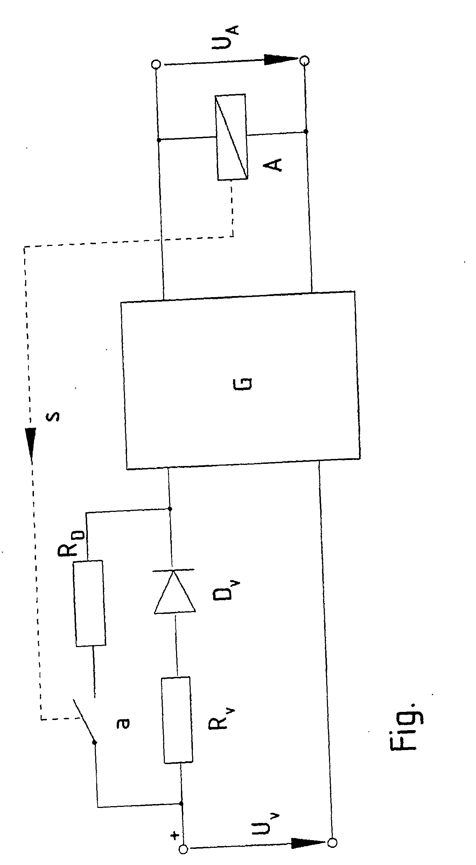

Die Erfindung samt weiterer Vorteile ist im folgenden anhand beispielsweiser Ausführungsformen näher erläutert, die in der Zeichnung veranschaulicht sind. In dieser zeigt die einzige Figur eine Schutzschaltung nach der Erfindung für ein Netzgerät unter Verwendung eines Relais.

Bei der gezeigten Ausführungsform ist das Netzgerät G ein Schaltnetzteil, das von einer Gleichspannungsquelle Uᵥ, z.B. einer Zwischenkreisspannung, versorgt wird und eine Ausgangsgleichspannung U_{A} liefert. In der positiven Eingangsleitung des Netzgerätes G ist in bekannter Weise die Serienschaltung einer Diode Dᵥ und eines Schutzwiderstandes Rᵥ angeordnet, und diese Serienschaltung ist von einem Arbeitskontakt a eines Relais A, a überbrückt. Die Erregerwicklung A des Relais liegt hier an dem Gleichspannungsausgang des Netzgerätes G mit einer Soll-Ausgangsspannung U_{A}. Das Relais bzw. die Relaiswicklung wird so dimensioniert, dass bei Erreichen eines bestimmten Wertes der Ausgangsspannung U_{A} das Relais anzieht, der Kontakt a schließt und die Serienschaltung Rᵥ/Dᵥ überbrückt. Die Verwendung eines Relais A, a bringt neben dem niedrigen Kontaktwiderstand des Arbeitskontaktes a auch den Vorteil der galvanischen Trennung, die bei einem Netzgerät erforderlich sein kann.

Bei Anschalten des Netzgerätes G an die Versorgungsspannung Uᵥ wird, eine richtige Polung vorausgesetzt, ein durch den Widerstand Rᵥ begrenzter Strom in das Netzgerät G fließen und dessen Ausgangsspannung U_{A} ansteigen, bis die Spule des Relais A, a genügend erregt ist, dass der Arbeitskontakt a schließt. Der Betriebsstrom für das Gerät G fließt nun über einen niederohmigen Dämpfungswiderstand R_{d}. Dieser Dämpfungswiderstand soll extreme Spannungsspitzen und damit hochfrequente Störungen vermeiden, kann jedoch in vielen Fällen auch entfallen.

Nimmt man einen Dauerstrom für das Netzgerät G von 2A an und einen Kontaktwiderstand des Relais von 10m Ohm, so ergibt sich eine Dauerverlustleistung von 40mW, Setzt man dagegen bei gleichem Strom von 2A den Verlust an der Diode Dᵥ mit, 0,7 V x 2 A, somit mit 1,4 W an und verwendet einen Begrenzungswiderstand, beispielsweise einen Heißleiter mit einem Betriebswiderstand von 1 Ohm, so entsteht ein Ohmscher Verlust von 4 W und insgesamt eine Dauerverlustleistung von 5,4 W. Diese Verlustleistung ist um zwei Größenordnungen größer als ohne Verwendung einer Schutzschaltung.

Es sei an dieser Stelle erwähnt, dass der Begrenzungswiderstand Rᵥ entfallen bzw. als in der Diode enthalten angesehen werden kann, wenn der Durchlasswiderstand der Diode Dᵥ einen Wert aufweist, der für die jeweils gewünschte Strombegrenzung hoch genug ist.

## Patentansprüche

1. Schutzschaltung für ein Netzgerät (G), welche zwischen einer Gleichspannungsquelle (Uᵥ) und dem Betriebsspannungseingang des Gerätes (G) gelegen ist, und aus der Serienschaltung einer Diode (Dᵥ) und eines Begrenzungswiderstandes (Rᵥ) besteht, wobei die Diode (Dᵥ) und der Begrenzungswiderstand durch einen Relais-Arbeitskontakt (a) überbrückt sind, welcher bei Erreichen eines vorgebbaren Mindestwertes (U_{M}) einer Spannung des Netzgerätes (G), an welche eine Erregerwicklung (A) des Relais (A, a) angeschlossen ist, schließbar ist,
**dadurch gekennzeichnet, dass**
die Erregerwicklung (A) des Relais (A, a) an die Ausgangsspannung (U_{A}) des Netzgerätes (G) angeschlossen ist.

2. Schutzschaltung nach Anspruch 1, **dadurch gekennzeichnet, dass** in Serie mit dem Arbeitskontakt (a) ein niedrigohmiger Dämpfungswiderstand (R_{D}) liegt.

## Claims

1. Protective circuit for a mains power supply unit (G) which is provided between a direct voltage source (Uᵥ) and the operating voltage input of the unit (G), and consists of the series connection of a diode (Dᵥ) and a limiting resistor (Rᵥ), wherein the diode (Dᵥ) and the limiting resistor are bridged by means of a normally open relay contact (a) which can be closed upon attainment of a predeterminable minimum value (U_{M}) of a voltage of the mains power supply unit (G), to which an exciter winding (A) of the relay (A, a) is connected
**characterised in that**
the exciter winding (A) of the relay (A, a) is connected to the output voltage (U_{A}) of the mains power supply unit (G).

2. Protective circuit according to claim 1, **characterised in that** a low-ohmic damping resistor (R_{?}) is in series with the normally open contact (a).

## Revendications

1. Circuit de protection pour un bloc secteur (G), qui est situé entre une source de tension continue (Uᵥ) et l'entrée de la tension de service du bloc secteur (G) et qui se compose d'une diode (Dᵥ) et d'une résistance de limitation (Rᵥ) disposées en série, la diode (Dᵥ) et la résistance de limitation étant shuntées par un contact de travail d'un relais (a), qui peut être fermé lorsque est atteinte une valeur minimale pouvant être prédéterminée (U_{M}) d'une tension du bloc secteur (G) à laquelle est raccordée une bobine d'excitation (A) du relais (A,a), **caractérisé en ce que** la bobine d'excitation (A) du relais (A,a) est raccordée à la tension de sortie (U_{A}) du bloc secteur (G).

2. Circuit de protection selon la revendication 1, **caractérisé en ce qu'**une résistance d'atténuation à faible valeur ohmique (R_{D}) est placée en série avec le contact de travail (a).
